# EUROPÄISCHE PATENTSCHRIFT

(11) **EP 1 525 067 B1**
(45) Veröffentlichungstag und Bekanntmachung des Hinweises auf die Patenterteilung: **19.09.2007**
(21) Anmeldenummer: 03759931.3
(22) Anmeldetag: 11.06.2003
(51) Int. Cl.: B23K 1/012, B23K 1/008

(54) **PROZESSKAMMER EINER ANLAGE ZUR TEMPERATURBEHANDLUNG VON LEITERPLATTEN**
PROCESS CHAMBER OF AN INSTALLATION FOR THERMALLY TREATING PRINTED CIRCUIT BOARDS
CHAMBRE DE TRAITEMENT D'UN SYSTEME DE TRAITEMENT THERMIQUE DE PLAQUETTES CONDUCTRICES

(30) Priorität: 14.06.2002 DE 10226593
(43) Veröffentlichungstag der Anmeldung: 27.04.2005
(73) Patentinhaber: Seho Systemtechnik GmbH, 97892 Kreuzwertheim (DE)
(72) Erfinder: DIEHM, Rolf, Ludwig, 97877 Wertheim (DE); ULLRICH, Rudolf, 97892 Kreuzwertheim (DE)
(74) Vertreter: Bardehle, Heinz
(86) Internationale Anmeldenummer: PCT/EP2003/006131
(87) Internationale Veröffentlichungsnummer: WO 2003/106092

(56) Entgegenhaltungen:
- DE-A- 4 416 959

## Beschreibung

Die Erfindung bezieht sich auf eine Prozesskammer einer Anlage zur Temperaturbehandlung von Leiterplatten oder dergleichen mit einer auf einer Achse parallel zu den Leiterplatten gelagerten Gebläsewalze , die zwischen zwei Wänden der Prozesskammer angeordnet ist.

Eine derartige Prozesskammer ist in der DE OS 4416959 dargestellt und beschrieben. Bei dieser Prozesskammer wird eine Gebläsewalze verwendet, die Gas, insbesondere Luft, aus der Umwelt ansaugt und in einen Kanal abgibt, der zwischen den Wänden der Prozesskammer verläuft und auf die zu behandelnden Leiterplatten gerichtet ist. Der Gebläsewalze wird dabei das Gas über deren Peripherie zugeleitet und von deren Oberfläche abgeführt, wobei das Gas auch teilweise in den freien Innenraum der Gebläsewalze gelangt und aufgrund deren Rotation und den in der Gebläsewalze enthaltenen Schaufeln von dieser aufgrund der dem Gas aufgedrückten Fliehkraft weggeführt wird. Es hat sich gezeigt, dass mit einer derartigen Prozesskammer Gasströme nur begrenzten Gasdrucks erzeugt werden können. Um die für die Behandlung der Leiterplatten erforderliche Gasgeschwindigkeit zu erzeugen, muss die Gebläsewalze mit hoher Drehzahl betrieben werden, was mit Rücksicht auf den erforderlichen Antrieb und Verschleiß der Lagerung der Gebläsewalze unerwünscht ist. Hinzu kommt, dass zum Aufschmelzen von auf den Leiterplatten aufgebrachten Lots eine hohe Temperatur, z.B. bis zu 400°C, des Gases erforderlich ist, was die Verschleißneigung insbesondere der Lager der Gebläsewalze entsprechend erhöht.

Der Erfindung liegt die Aufgabe zugrunde, diese Nachteile zu vermeiden und der Prozesskammer eine Struktur zu geben, bei der die Gebläsewalze mit wesentlich geringerer Drehzahl betrieben werden kann. Erfindungsgemäß geschieht dies dadurch, dass die Gebläsewalze an ihren beiden Stirnseiten offen ist und die beiden Stirnseiten gegenüber den Wänden der Prozesskammer einen solchen Abstand einhalten, dass Gas in zwei Teilströmen ungehindert zwischen den Stirnseiten der Gebläsewalze und den Wänden einströmt und aus der zylindrischen Oberfläche der Gebläsewalze über dessen Länge und in der Ausdehnung der Prozesskammer als ein bandförmiger Gasstrom abströmt, der im Wesentlichen in diesem Querschnitt durch einen Kanal auf die Leiterplatten geleitet wird.

Durch diese Gestaltung der Prozesskammer ergibt sich gegenüber der bekannten Prozesskammer ein grundsätzlich anderer Verlauf der Gasströmung, nämlich das Einströmen des Gases mittels der beiden Teilströme über die beiden offenen Stirnseiten der Gebläsewalze, die mit ihren Schaufeln das ihr von innen her zugeführte Gas in eine Rotationsbewegung überführt, wobei aufgrund der dabei auftretenden Fliehkräfte das Gas radial von der Oberfläche der Gebläsewalze weggeschleudert wird, ohne dass diese Gasführung durch von außen her zugeführtes Gas irgendwie behindert wird. Die Folge davon ist ein hoher Durchsatz von Gas mittels der derart betriebenen Gebläsewalze, womit diese mit entsprechend geringer Drehzahl betrieben werden kann und trotzdem einen hohen Durchsatz mit entsprechend hohem Gasdruck erzeugt. Das weggeführte Gas verläuft dabei als bandförmiger Gasstrom mit einer Ausdehnung entsprechend dem Ausmaß der Prozesskammer, so dass dieser bandförmige Gasstrom direkt durch einen entsprechend im Querschnitt des Gasstroms gestalteten Kanal auf die Leiterplatten geleitet werden kann und damit auf diese als ein über die Ausdehnung der Prozesskammer gleichmäßiger Gasstrom auftrifft, ohne dass dabei irgendwelche Querströmungen oder undefinierte Verwirbelungen entstehen können.

Vorteilhaft wird die Prozesskammer in einem Gehäuse untergebracht, das mit Gehäuseplatten einen Zwischenraum zu den Wänden der Prozesskammer bildet, in dem die beiden Teilströme geführt und über Durchbrüche in den Gehäuseplatten den Stirnseiten der Gebläsewalze zugeführt werden. Aufgrund dieser Führung der beiden Teilströme ergibt sich eine klare Trennung von dem bandförmigen Gasstrom, der auf diese Weise mit den Teilströmen nicht vermischt werden kann und demgemäss unbeeinträchtigt die zu behandelnden Leiterplatten beaufschlagt.

Die Unterbringung der Prozesskammer in dem Gehäuse ermöglicht es, die Gebläsewalze einseitig in einer der beiden Wände zu lagern. Dies liefert den Vorteil, dass im Falle irgendeiner notwendigen Reparatur der Aus- und Einbau der Gebläsewalze wesentlich erleichtert wird.

Bei der mittels der Prozesskammer durchgeführten Temperaturbehandlung von Leiterplatten kann es sich sowohl um das Aufheizen von Leiterplatten zum Zwekke des Aufschmelzens von Lötstellen oder auch um deren Kühlung handeln. Im Falle der Aufheizung wird die Prozesskammer zusätzlich mit parallel zur Gebläsewalze in dem bandförmigen Luftstrom verlaufenden Heizstäben versehen, wie diese in der oben erwähnten DE-OS 44 16 959 in Figur 2 dargestellt sind. Für die Durchführung einer Kühlung kann anstelle eines Heizstabes ein mit einer Kühlflüssigkeit versehener Kühlstab vorgesehen werden. Die Prozesskammer lässt sich also vielseitig im Sinne jeglicher Temperaturbehandlung von Leiterplatten verwenden.

In den Figuren sind Ausführungsbeispiele der Erfindung dargestellt. Es zeigen:
- Figur 1: die Prozesskammer, teilweise aufgeschnitten, in perspektivischer Sicht;
- Figur 2: die Prozesskammer ohne die Vorderwand des Gehäuses, durch die die Leiterplatten eingeschleust werden in prinzipieller Darstellung;
- Figur 3: die Prozesskammer ohne eine Seitenwand des Gehäuses, die zur Halterung des Antriebs für die Gebläsewalze dient, ebenfalls in prinzipieller Darstellung;
- Figur 4: die Gebläsewalze mit ihrem Antrieb allein in perspektivischer Sicht.

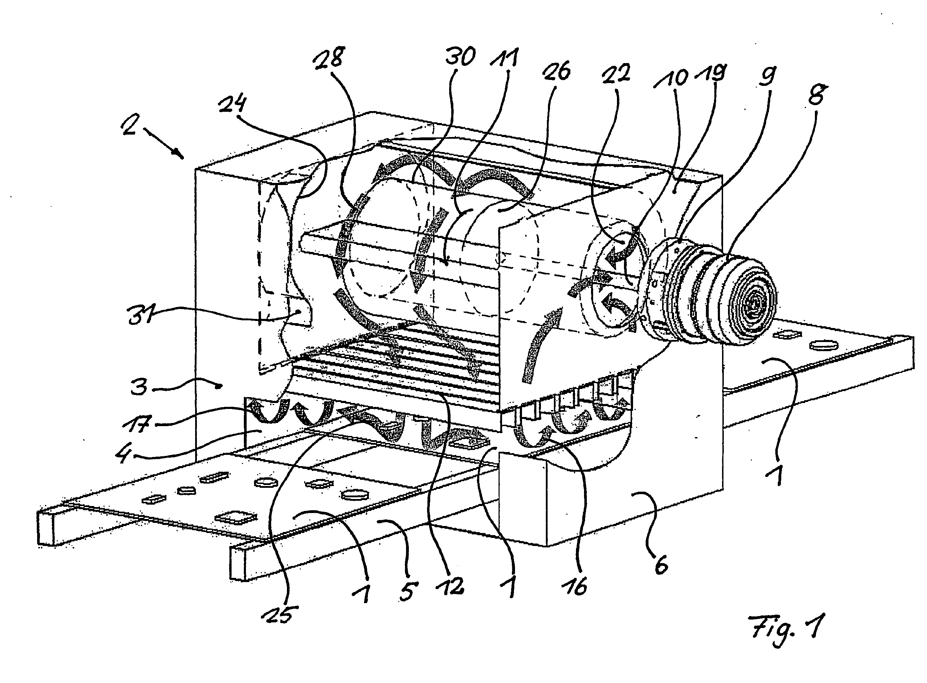

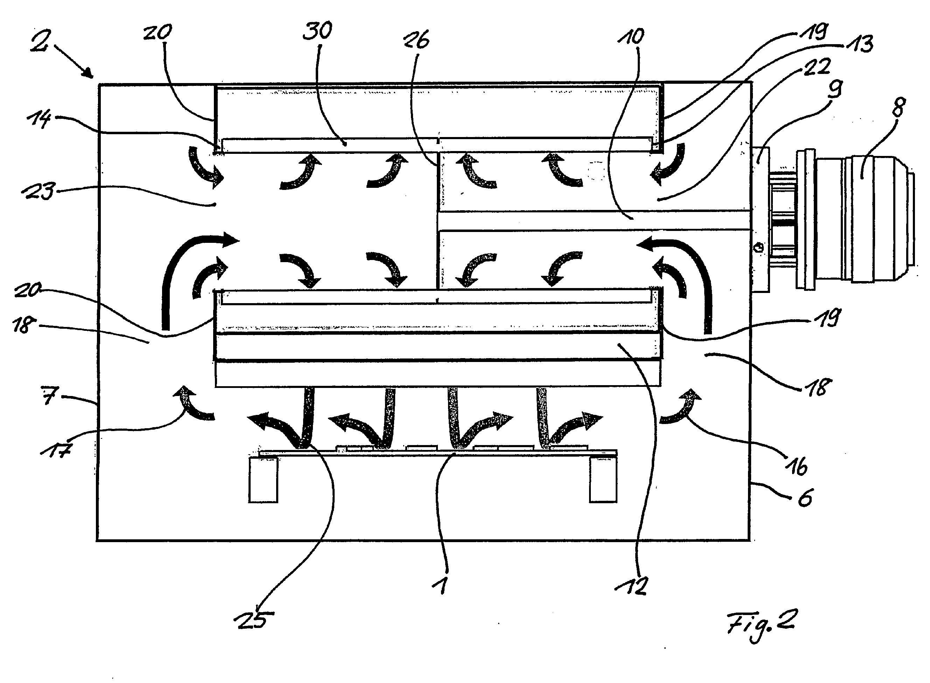

Die in der Figur 1 dargestellte Prozesskammer, die zur Temperaturbehandlung von Leiterplatten 1 dient, wird von dem Gehäuse 2 umgeben, dessen Vorderwand 3, die teilweise zur Ermöglichung eines Einblicks in den Innenraum teilweise aufgeschnitten ist, einen Einlaufschlitz 4 aufweist, der von der Fördervorrichtung 5 für den Transport der Leiterplatten 1 in die Prozesskammer durchsetzt ist. Bei der Fördervorrichtung 5 handelt es sich um eine konventionelle Baugruppe, wie diese in vielfältiger Weise im Zusammenhang mit Lötmaschinen Verwendung findet. Seitlich wird das Gehäuse 2 von Seitenwänden begrenzt, von denen nur die rechte Seitenwand 6 sichtbar ist. Eine entsprechende Seitenwand 7 schließt sich an die Vorderwand 3 auf der linken Seite der Prozesskammer an (siehe Fig. 2).

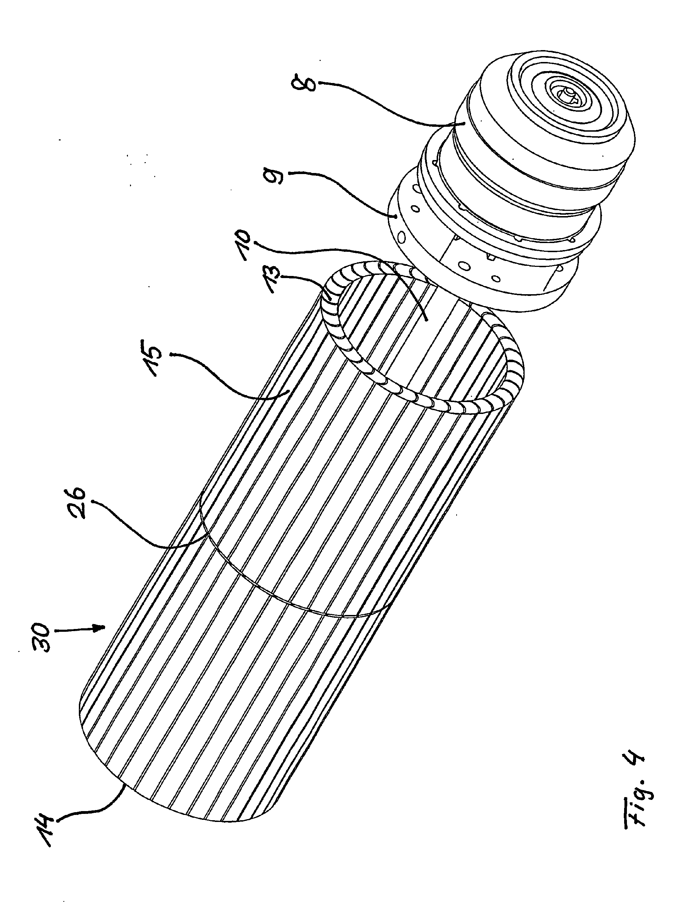

In dem Gehäuse 2 ist die Gebläsewalze 30 untergebracht, die in Einzeldarstellung in der Figur 4 veranschaulicht ist. Die Gebläsewalze 30 wird von dem Antriebsmotor 8 angetrieben, der mittels des Flansches 9 an der Seitenwand 6 des Gehäuses 2 befestigt ist. Der Antriebsmotor 8 treibt die Gebläsewalze 30 über deren Achse 10 an, und zwar in der durch den Pfeil 11 dargestellten Drehrichtung, also in Blickrichtung vom Antriebsmotor 8 entlang der Achse 10 auf die Gebläsewalze 30 entgegen dem Uhrzeigersinn. Mit ihren in der Figur 4 dargestellten Schaufeln 15 (aufgrund der besseren Übersichtlichkeit in Figur 1 weggelassen) bewirkt die Gebläsewalze 30 entsprechend den fett gezeichneten Pfeilen 28 einen bandförmigen Gasstrom, der auf die Düsenplatte 12 unter der Gebläsewalze 30 gerichtet ist, die Düsenplatte 12 in gerichteten Gasströmungen durchsetzt und danach auf eine darunter befindliche Leiterplatte 1 auftrifft und an dieser die gewünschte Temperaturbehandlung vornimmt. Dieser von der Gebläsewalze 30 ausgehende Gasstrom wird dadurch ermöglicht, dass die Gebläsewalze 30 an ihren beiden Stirnseiten (Bezugszeichen 13 und 14 in Figur 2) offen ist und über diese offenen Stirnseiten Gas ansaugt, das danach in den Innenraum der Gebläsewalze 30 einströmt und von hier aus aufgrund der Wirkung der Schaufeln 15 (siehe Figur 4) - durch die dabei entstehende Fliehkraft radial nach außen weggeblasen wird. Die aus der Düsenplatte 12 austretenden Gasströmungen werden nach Auftreffen auf eine zu behandelnde Leiterplatte 1 seitlich abgelenkt, wie dies durch die Pfeile 16 und 17 dargestellt ist. Diese derart abgelenkten Gasströmungen bilden zwei Teilströme, die einerseits durch die Pfeile 16 und andererseits durch die Pfeile 17 symbolisiert werden. Diese beiden Teilströme verlaufen jeweils in einem Zwischenraum 18 (siehe Fig. 2), der einerseits von den Seitenwänden 6 und 7 (siehe Fig. 2) und den Gehäuseplatten 19 und 20 (siehe Fig. 2) gebildet wird, von denen die Gehäuseplatte 19 auch in der Figur 1 sichtbar ist. Die Gehäuseplatten 19 und 20 erstrecken sich oberhalb der Düsenplatte 12 über die gesamte Fläche der Seitenwände 6 und 7 und bilden damit den für die Führung der beiden Teilströme (Pfeile 16 und 17) erforderlichen Zwischenraum 18 für die Führung dieser beiden Teilströme, die dann über koaxial zu der Achse 10 vorgesehene Durchbrüche in den Gehäuseplatten 22 und 23 (siehe Figur 2) in den Innenraum der Gebläsewalze 30 gelangen.

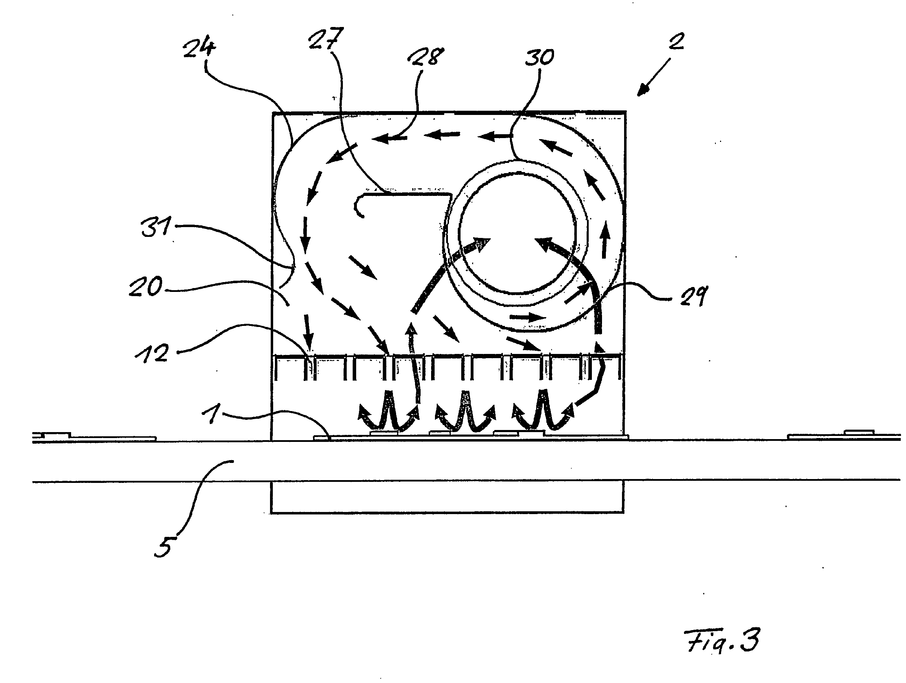

Aufgrund dieser Führung des Gases im Innenraum der Prozesskammer ergibt sich am Umfang der Gebläsewalze 30 ein im Wesentlichen bandförmiger Gasstrom, der durch die die Gebläsewalze 30 umgebenden fett gezeichneten Pfeile 28 repräsentiert wird. Dieser bandförmige Gasstrom hat eine Breite, die der Länge der Gebläsewalze 30 entspricht. Er wird im Inneren des Gehäuses 2 durch das die Gebläsewalze 30 in Abstand umgebende Führungsblech 24 geführt (siehe auch Figur 3), dessen Ende 31 den bandförmigen Gasstrom dann auf die Düsenplatte 12 lenkt.

In der Figur 2 ist die Prozesskammer mit dem Gehäuse 2 mit einer Draufsicht auf die Vorderwand 3 (siehe Fig. 1) dargestellt, die allerdings in Figur 2 weggelassen ist, um den Einblick in das Innere des Gehäuses 2 zu gestatten. Daraus ist ersichtlich, wie die beiden Teilströme (Pfeile 16 und 17) aus den Zwischenräumen 18 in das Innere der Gebläsewalze 30 gelenkt werden, und zwar durch die Durchbrüche 22 und 23. Weiterhin zeigt Figur 2 deutlich, wie der bandförmige Gasstrom nach Hindurchtreten durch die Düsenplatte 12, dargestellt durch die fett gezeichneten Pfeile 25 unterhalb der Düsenplatte 12, auf die Leiterplatte 1 auftrifft, von dieser abgelenkt wird und in die beiden Teilströme (Pfeile 16 und 17) aufgeteilt wird.

Figur 2 zeigt weiterhin die Befestigung des Antriebsmotors 8 für die Gebläsewalze 30, der über den Flansch 9 an der Seitenwand 6 befestigt ist und mit der Achse 10 die Gebläsewalze 30 antreibt. Diese weist hier zu ihrer inneren Stützung die Stützscheibe 26 auf, an der die einzelnen Schaufeln 15 der Gebläsewalze 30 befestigt sind.

In der Figur 3 ist die Prozesskammer in einer Seitensicht mit Blickrichtung auf die Gehäuseplatte 19 (Fig. 1) dargestellt, wobei allerdings die Seitenwand 6 weggelassen ist, um den Einblick in das Innere des Gehäuses 2 zu ermöglichen. Aus der Figur 3 geht deutlich der bandförmige Gasstrom 28 hervor, der von der Gebläsewalze 30 erzeugt wird und durch die Düsenplatte 12 auf die Leiterplatte 1 gerichtet ist. Der bandförmige Gasstrom 28 wird dabei von dem Führungsblech 24 auf die Düsenplatte 12 gelenkt. Das Führungsblech 24 setzt sich entgegen der Strömungsrichtung des Gasstromes 28 fort und umrundet die Gebläsewalze 30 in dem runden Teil 29, das schließlich in den Vorsprung 27 übergeht, der den Gasstrom nach seinem Austritt aus der Gebläsewalze 30 von dieser weglenkt. Der runde Teil 29 ist so angeordnet, dass sein Abstand von der Gebläsewalze 30, in Strömungsrichtung betrachtet, ständig zunimmt, um das zunehmende Luftvolumen des Gasstromes 28 mit zunehmendem Querschnitt aufnehmen zu können.

In der Figur 4 ist die Gebläsewalze 30 zusammen mit dem Antriebsmotor 8 allein dargestellt. Die Figur 4 zeigt die einzelnen Schaufeln 15, die in bekannter Weise um die Achse 10 angeordnet sind und über die Mittelscheibe 26 zusammengefasst und festgehalten werden. Die Mittelscheibe ist, wie Figur 2 zeigt, auf der Achse 10 befestigt.

## Patentansprüche

1. Prozesskammer einer Anlage zur Temperaturbehandlung von Leiterplatten (1), mit einer auf einer Achse (10) parallel zu den Leiterplatten (1) gelagerter Gebläsewalze (30), die zwischen zwei Wänden der Prozesskammer angeordnet ist, **dadurch gekennzeichnet, dass** die Gebläsewalze (30) an ihren beiden Stirnseiten (13, 14) offen ist und die beiden Stirnseiten (13, 14) gegenüber den Wänden (6, 7) der Prozesskammer einen solchen Abstand einhalten, dass Gas in zwei Teilströmen (16, 17) ungehindert zwischen den Stirnseiten (13, 14) der Gebläsewalze (30) und den Wänden (6, 7) einströmt und aus der zylindrischen Oberfläche der Gebläsewalze (30) über deren Länge und in der Ausdehnung der Prozesskammer als ein bandförmiger Gasstrom (28) abströmt, der im Wesentlichen in diesem Querschnitt durch einen Kanal (29, 24) auf die Leiterplatten (1) geleitet wird.

2. Prozesskammer nach Anspruch 1, **dadurch gekennzeichnet, dass** sie in einem Gehäuse (2) enthalten ist, das mit Gehäuseplatten (19, 20) einen Zwischenraum (18) zu den Wänden (6, 7) der Prozesskammer bildet, in dem die beiden Teilströme (16, 17) geführt und über Durchbrüche (22, 23) in den Gehäuseplatten (19, 20) den Stirnseiten der Gebläsewalze (30) zugeführt werden.

3. Prozesskammer nach Anspruch 1, **dadurch gekennzeichnet, dass** die Gebläsewalze (30) einseitig in einer der beiden Wände (6, 7) gelagert ist.

## Claims

1. Process chamber of an apparatus for the temperature treatment of printed-circuit boards (1), with a turbine wheel (30) supported on a shaft (10) parallel to the printed-circuit boards (1), said turbine wheel (30) being disposed between two walls of the process chamber, **characterized in that** the turbine wheel (30) is open at its two ends (13, 14) and the two ends (13, 14) are at such a distance from the walls (6, 7) of the process chamber that gas in two partial streams (16, 17) flows in unhindered between the ends (13, 14) of the turbine wheel (30) and the walls (6, 7) and flows out from the cylindrical surface of the turbine wheel (30) over the length thereof and in the extent of the process chamber in the form of a ribbon-shaped gas stream (28), said ribbon-shaped gas stream (28) being directed substantially in this cross section through a duct (29, 24) onto the printed-circuit boards (1).

2. Process chamber according to claim 1, **characterized in that** said process chamber is contained in a housing (2), said housing (2) forming with housing plates (19, 20) an intermediate space (18) with respect to the walls (6, 7) of the process chamber, in which intermediate space (18) the two partial streams (16, 17) are guided and are supplied through penetrations (22, 23) in the housing plates (19, 20) to the ends of the turbine wheel (30).

3. Process chamber according to claim 1, **characterized in that** the turbine wheel (30) is supported on one side in one of the two walls (6, 7).

## Revendications

1. Chambre de processus d'une installation de traitement thermique de plaques de circuits imprimés (1), comprenant un tambour soufflant (30) monté sur un axe (10) parallèlement aux plaques de circuits imprimés (1) et disposé entre deux parois de la chambre de processus, **caractérisée en ce que** le tambour soufflant (30) est ouvert sur ses deux faces frontales (13, 14), et les deux faces frontales (13, 14) présentent, par rapport aux parois (6, 7) de la chambre de processus, une distance telle que du gaz circule librement, sous forme de deux courants partiels (16, 17), entre les faces frontales (13, 14) du tambour soufflant (30) et les parois (6, 7) et sort de la surface cylindrique du tambour soufflant (30), sur la longueur de celui-ci et sur l'extension de la chambre de processus, sous la forme d'un flux gazeux en ruban (28), lequel est dirigé, sensiblement avec cette section transversale, vers les plaques de circuits imprimés (1) par l'intermédiaire d'un canal (29, 24).

2. Chambre de processus selon la revendication 1, **caractérisée en ce qu'**elle est logée dans un carter (2) qui, avec des panneaux de carter (19, 20), forme, par rapport aux parois (6, 7) de la chambre de processus, un interstice (18) dans lequel les deux courants partiels (16, 17) sont conduits et, à travers des passages (22, 23) ménagés dans les panneaux de carter (19, 20), sont amenés aux faces frontales du tambour soufflant (30).

3. Chambre de processus selon la revendication 1, **caractérisée en ce que** le tambour soufflant (30) est monté d'un seul côté dans une des deux parois (6, 7).
